# EUROPÄISCHE PATENTSCHRIFT

(11) **EP 4 120 502 B1**
(45) Veröffentlichungstag und Bekanntmachung des Hinweises auf die Patenterteilung: **11.12.2024**
(21) Anmeldenummer: 22174386.7
(22) Anmeldetag: 19.05.2022
(51) Int. Cl.: H02J 3/38, F03D 13/25, B63B 21/50, F03D 9/25, B63B 35/44

(54) **OFFSHORE-WINDPARK MIT EINER MEHRZAHL VON SCHWIMMENDEN SINGLE-POINT-MOORING-WINDENERGIEANLAGEN**
OFFSHORE WIND FARM WITH A PLURALITY OF FLOATING SINGLE-POINT MOORING WIND POWER FACILITIES
PARC ÉOLIEN EN MER DOTÉ D'UN NOMBRE D'ÉOLIENNES FLOTTANTES À UN SEUL POINT D'AMARRAGE

(30) Priorität: 15.07.2021 DE 102021118328
(43) Veröffentlichungstag der Anmeldung: 18.01.2023
(73) Patentinhaber: Aerodyn Consulting Singapore Pte Ltd, Singapore 048622 (SG)
(72) Erfinder: Siegfriedsen, Sönke, 24768 Rendsburg (DE)
(74) Vertreter: Lobemeier, Martin Landolf

(56) Entgegenhaltungen:
- WO-A1-2012/048743
- CN-A- 110 654 510
- DE-A1- 102015 121 371
- US-A1- 2013 152 839

## Beschreibung

Die Erfindung betrifft einen Offshore-Windpark mit einer Mehrzahl von schwimmenden Single-Point-Mooring-Windenergieanlagen. Insbesondere betrifft die Erfindung einen Offshore-Windpark mit einer Mehrzahl von innerhalb von parkettiert angeordneten Teilflächen angeordneten schwimmenden Single-Point-Mooring-Windenergieanlagen und einer mit den schwimmenden Single-Point-Mooring-Windenergieanlagen verbundenen Sammelstation, die mittels einer Übertragungsleitung mit einem Stromnetz verbunden ist.

Die Ausgestaltung von Windparks ist insbesondere aus der WO 2012/048743 A1, der CN 110 654 510 A, der DE 10 2015 121 371 A1 und der US 2013/152839 A1 bekannt.

Insbesondere die WO 2012/048743 offenbart einen Offshore-Windpark mit, um eine zentrale Station in gleichen Abstand sternförmig angeordneten und einzeln angebundenen, Windenergieanlagen.

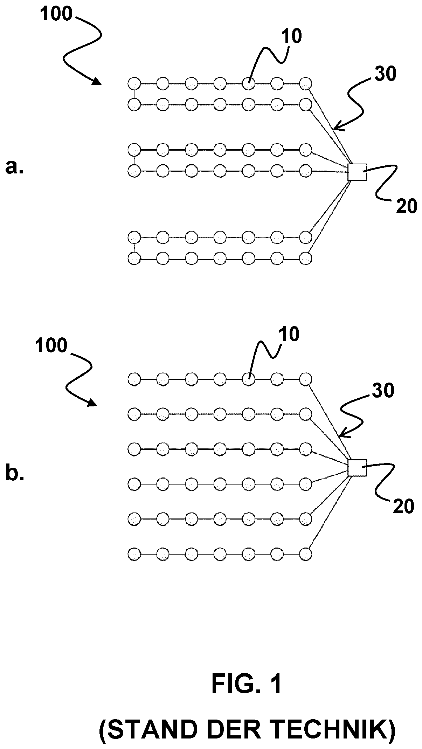

Die Windenergieanlagen eines Offshore-Windparks mit fest am Boden verankerten Windenergieanlagen werden üblicherweise mittels einer in Fig. 1 dargestellten Ringverkabelung gemäß einer Ringtopologie (Fig. 1a) oder als Radialverkabelung gemäß einer Linientopologie (Fig. 1b) an das Stromnetz angebunden.

Bei der in Fig. 1a dargestellten Ringverkabelung werden mehrere Windenergieanlagen 10 eines Offshore-Windparks 100 zu einer Ringleitung 30 verschaltet, deren beiden Enden mit einer beispielsweise als Umspannplattform ausgebildeten Sammelstation 20 verbunden sind, die mittels einer (nicht dargestellten) zentralen Übertragungsleitung mit einem Stromnetz verbunden ist. Bei dieser Verkabelung wird die gesamte Leistung aller im Ringschluss angeordneten Windenergieanlagen 10 über das Kabel 30 übertragen. Zur Übertragung der Summe der elektrischen Ströme der Einzelanlagen ist die Verwendung eines sehr dicken Kabels erforderlich, wobei die Installation des Kabels aufgrund dessen Gewichts und Steifigkeit sehr aufwändig ist. Ein weiterer Nachteil der Ringtopologie besteht darin, dass drei Mittelspannungsschaltanlagen für jede einzelne Anlage erforderlich sind, um die verbleibenden Anlagen des Rings im Fall des Defekts oder der Wartung einer der Anlagen weiterbetreiben zu können. Diese Schaltanlagen benötigen Platz und sind aufwändig herzustellen, zu installieren und darüber hinaus auch störanfällig.

Eine andere Möglichkeit - wie in Fig. 1b gezeigt - ist die Windenergieanlagen 10 des Offshore-Windparks gemäß der Linientopologie in Reihen zu verbinden und dann mittels eines Kabels 30 auf die Sammelstation 20 zu führen. Gegenüber der Ringverkabelung hat diese Anordnung den Nachteil, dass bei einem Ausfall einer Leitung zwischen den Anlagen die von der Sammelstation 20 aus gesehen hinter diesem Schaden angeordneten Anlagen 10 nicht mehr betrieben werden können und ausgeschaltet werden müssen. Zugleich sind bei dieser Anordnung für jede einzelne Windenergieanlage mehrere Schaltanlagen notwendig, sodass auch ein hoher Installationsaufwand besteht.

Wenngleich die insgesamt benötigte Kabellänge bei der Linientopologie geringer ausfällt als bei der Ringtopologie führt die Verwendung eines sehr leistungsstarken, dicken Kabels und die Anzahl der benötigten Schaltanlagen zu einem für die Anbindung der Offshore-Windenergieanlagen hohen Material- und Arbeitsaufwand.

Insbesondere ist aber die Verwendung eines schweren Seekabels bei der Installation von schwimmenden Single-Point-Mooring-Windenergieanlagen hinderlich, da dieses aufgrund seines Eigengewichts und seiner Steifigkeit die Schwimmeigenschaften, insbesondere die Selbstausrichtung dieser schwimmenden Offshore-Windenergieanlagen behindert. Im Gegensatz zu bodengebundenen Offshore Anlagen wird durch die große vertikale und horizontale Bewegung des Schwimmfundaments derartiger Windenergieanlagen und durch Wind- und Wellenlasten eine starke mechanische Beanspruchung der Kabel verursacht, sodass die durch diese Bewegungen verursachten Bewegungen der Kabel hohe Ansprüche an die Haltbarkeit der Kabel stellen, die folglich eine Schwachstelle für den durchgängigen Betrieb sind.

Aufgabe der Erfindung ist es daher insbesondere, eine elektrische Anbindung von schwimmenden Single-Point-Mooring-Windenergieanlagen an eine Sammelstation zu schaffen, die mit geringem Material- und Arbeitsaufwand, mit möglichst geringem Einfluss auf die Schwimmeigenschaften der Windenergieanlagen und mit größtmöglicher Bewegungsfreiheit der schwimmenden Windenergieanlage und dabei gegebener Langzeithaltbarkeit der Kabel ermöglicht werden kann.

Diese Aufgabe wird erfindungsgemäß durch Offshore-Windpark mit den Merkmalen von Anspruch 1 gelöst. Die Unteransprüche geben vorteilhafte Ausgestaltungen der Erfindung wieder.

Der Grundgedanke der Erfindung besteht darin, wenigstens eine Teilmenge einer Mehrzahl von einen Offshore-Windpark bildenden schwimmenden Single-Point-Mooring-Windenergieanlagen mittels einer Sternverkabelung an eine Sammelstation anzuschließen. Dabei überträgt jedes von einer Windenergieanlage zur Sammelstation führende Kabel nur die Leistung einer einzelnen Anlage und nicht etwa die Leistung mehrerer zu einem Strang zusammengefasster Anlagen, sodass die verwendeten Kabel entsprechend dünner und mit größerer Flexibilität ausgelegt werden können. Zusätzlich ist die Summe der Längen der sternförmig verlaufenden Verbindungen zwischen jeweils einer schwimmenden Single-Point-Mooring-Windenergieanlage und der Sammelstation geringer ist als die Länge einer gedachten die Sammelstation und die schwimmenden Single-Point-Mooring-Windenergieanlagen miteinander verbindenden Linie. Durch diese Maßnahme kann eine weitere Materialeinsparung erfolgen.

Erfindungsgemäß wird ein Offshore-Windpark mit einer Mehrzahl von innerhalb von parkettiert angeordneten Teilflächen angeordneten schwimmenden Single-Point-Mooring-Windenergieanlagen und einer mit den schwimmenden Single-Point-Mooring-Windenergieanlagen verbundenen Sammelstation, die mittels einer Übertragungsleitung mit einem Stromnetz verbunden ist, vorgeschlagen, wobei wenigstens eine Teilmenge der Mehrzahl von schwimmenden Single-Point-Mooring-Windenergieanlagen unter Ausbildung eines sternförmigen Stromnetzes jeweils mit einem eigenen Seekabel direkt mit der Sammelstation verbunden ist, wobei die Summe der Länge der direkten Verbindungen zwischen den schwimmenden Single-Point-Mooring-Windenergieanlagen und der Sammelstation geringer ist als die Länge einer gedachten die Sammelstation und die schwimmenden Single-Point-Mooring-Windenergieanlagen miteinander verbindenden Linie.

Die Ausbildung des erfindungsgemäßen Offshore-Windparks mit einer sternförmigen Topologie erfordert also insgesamt eine geringere Kabellänge als zur Ausbildung einer Ring- oder Linientopologie erforderlich wäre, bei der die Sammelstation und die schwimmenden Single-Point-Mooring-Windenergieanlagen linear miteinander verbunden sind.

Nach einem bevorzugten Ausführungsbeispiel ist die elektrische Spannungsebene des in den zur Sammelstation führenden Seekabeln geführten Stroms mit der elektrischen Spannungsebene des in der mit der Übergabestation verbundenen Übertragungsleitung geführten Stroms identisch. Besonders bevorzugt ist vorgesehen, dass die elektrische Spannung des in den zur Sammelstation führenden Seekabeln geführten Stroms mit der elektrischen Spannung des in der mit der Übergabestation verbundenen Übertragungsleitung geführten Stroms identisch ist. Höchst bevorzugt beträgt die Spannung sowohl in den Seekabeln als auch in der Übertragungsleitung 66 kV.

Die direkte Verbindung einer schwimmenden Single-Point-Mooring-Windenergieanlage zur Sammelstation ist dabei insbesondere derart ausgelegt, dass das entsprechend verwendete Seekabel so kurz und so dünn wie möglich ausgeführt ist. Insbesondere nimmt die Sammelstation auch die Schaltanlagen der mit der Sammelstation verbundenen Windenergieanlagen auf, ohne dass die Single-Point-Mooring-Windenergieanlagen selbst Schaltanlagen aufweisen und so eine einfache, kostengünstige und kompakte Installation ermöglicht ist. Bei dieser Verschaltung wird pro Anlage nur eine einzige Schaltanlage pro Single-Point-Mooring-Windenergieanlage benötigt und nicht drei Schaltanlagen wie im Fall der Ringverkabelung. Dabei stellt eine Teilfläche diejenige (gedachte) polygonale Fläche in Draufsicht auf den Offshore-Windpark dar, die jeweils einer schwimmenden Single-Point-Mooring-Windenergieanlage einschließlich deren Verankerung zugeordnet ist. Die parkettiert angeordneten Teilflächen können als Dreieck, Rechteck oder Hexagon ausgebildet sein, wobei die Eckpunkte der Teilfläche - wie bereits aus der DE 10 2015 121 371 B4 bekannt - insbesondere die Positionen der Gründungen darstellen, mit deren Hilfe die schwimmenden Single-Point-Mooring-Windenergieanlagen am Gewässerboden fixiert sind.

Alternativ kann es sich dabei um gedachte Teilflächen handeln, deren Geometrie speziell durch einen vorbestimmten Abstand der Windenergieanlagen zueinander definiert ist. Dieser vorbestimmte Abstand kann beispielsweise ein Vielfaches des Rotordurchmessers der im Offshore-Windpark installierten Windenergieanlagen sein.

Die Sammelstation ist dabei nicht außerhalb eines die schwimmenden Windenergieanlagen aufweisenden Felds, sondern insbesondere im Mittelpunkt eines wenigstens die Teilmenge der schwimmenden Single-Point-Mooring-Windenergieanlagen umfassenden Umkreises angeordnet. Speziell ist die mit den schwimmenden Single-Point-Mooring-Windenergieanlagen verbundene Sammelstation besonders bevorzugt im Schwerpunkt der Parkettierung der mit der Sammelstation verbundenen schwimmenden Single-Point-Mooring-Windenergieanlagen angeordnet. Diese bevorzugten Anordnungen ermöglichen jeweils eine vorteilhafte Ausgestaltung der Erfindung, die im Hinblick auf die Verkabelung besonders materialschonend ausgeführt werden kann.

Eine besonders vorteilhafte Ausgestaltung hinsichtlich der Fertigung, Installation und Wartung des Offshore-Windparks wird auch dann erreicht, wenn die Sammelstation schwimmend ausgebildet ist. Die Sammelstation kann in diesem Fall nämlich an Land gefertigt, auf Ihre Funktion überprüft und zum Ort Ihrer Installation geschleppt werden, wobei auch ein einfacher Austausch möglich bleibt. Dabei kann die schwimmende Sammelstation insbesondere als Tension-Leg-Plattform (TLP) ausgebildet und höchst bevorzugt mit einer eine schwimmende Single-Point-Mooring-Windenergieanlage am Boden befestigenden Gründung verbunden sein. Derart wird der Material- und Installationsaufwand des Offshore-Windparks weiter verringert.

Weiter ist bevorzugt vorgesehen, dass eine weitere Teilmenge der Mehrzahl von schwimmenden Single-Point-Mooring-Windenergieanlagen unter Ausbildung eines weiteren sternförmigen Stromnetzes jeweils mit einem eigenen Seekabel direkt mit einer weiteren Sammelstation verbunden ist. Mit anderen Worten kann der Offshore-Windpark in einzelne Gruppen (Cluster) unterteilt sein, wobei ein Cluster aus einer Sammelstation und den mit dieser verbundenen schwimmenden Single-Point-Mooring-Windenergieanlagen besteht.

Als besonders vorteilhaft hat sich herausgestellt, wenn die Teilmenge oder die weitere Teilmenge der Mehrzahl von schwimmenden Single-Point-Mooring-Windenergieanlagen bevorzugt sechs schwimmende Single-Point-Mooring-Windenergieanlagen umfasst. Dieses ist insbesondere hinsichtlich des Installations- und Materialaufwands bei einer Parkettierung mit als Hexagonen ausgebildeten Teilflächen vorteilhaft.

Schließlich ist die Sammelstation bevorzugt mittels einer zentralen Übertragungsleitung mit einem landseitigen Stromnetz oder mit einer weiteren größeren Sammel- bzw. Umspannplattform als Teil eines Stromnetzes verbunden. Insbesondere sind die schwimmenden Single-Point-Mooring-Windenergieanlagen zur Erzeugung von elektrischer Leistung auf Hochspannungsebene, z.B. 66 kV, eingerichtet, die in der Sammelstation mit Hilfe einer elektrischen Sammelschiene zusammengeschossen werden, wobei die Sammelstation ohne weitere Umspannung auf eine höhere Wechsel- oder Gleichspannungsebene mit dem landseitigen Stromnetz mittels der zentralen Übertragungsleitung verbunden ist.

Die Erfindung wird im Folgenden anhand eines in den beigefügten Zeichnungen dargestellten, besonders bevorzugt ausgestalteten Ausführungsbeispiels näher erläutert. Es zeigen:
- Fig. 2: eine bevorzugte Ausgestaltung eines Offshore-Windparks mit schwimmenden Single-Point-Mooring-Windenergieanlagen, die unter Ausbildung eines sternförmigen Stromnetzes jeweils mit einem eigenen Seekabel direkt mit einer Sammelstation des Offshore-Windparks verbunden sind;
- Fig. 3: eine besonders bevorzugte Ausgestaltung eines Offshore-Windparks mit innerhalb von parkettiert angeordneten Teilflächen angeordneten schwimmenden Single-Point-Mooring-Windenergieanlagen;
- Fig. 4: eine Seitenansicht einer besonders bevorzugt ausgestalteten Sammelstation;
- Fig. 5: eine perspektivische Ansicht der in Fig. 4 dargestellten Sammelstation; und
- Fig. 6: eine Detailansicht des oberen Bereichs der zuvor dargestellten Sammelstation.

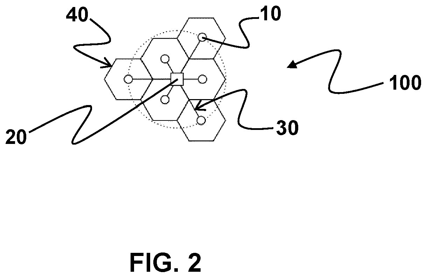

Fig. 2 zeigt eine schematische Draufsicht einer bevorzugten Ausgestaltung innerhalb eines Offshore-Windparks gruppierter schwimmender Single-Point-Mooring-Windenergieanlagen, die unter Ausbildung eines sternförmigen Stromnetzes jeweils mit einem eigenen Seekabel direkt mit einer der Gruppierung zugeordneten Sammelstation 20 des Offshore-Windparks verbunden sind.

Insbesondere zeigt Fig. 2 eine Ausgestaltung eines Offshore-Windparks 100 mit einer Mehrzahl von schwimmenden Single-Point-Mooring-Windenergieanlagen 10, jeweils einer Sammelstation 20 und einer Mehrzahl von jeweils eine schwimmende Single-Point-Mooring-Windenergieanlage 10 direkt mit der Sammelstation 20 verbindenden Seekabeln 30, sodass ein sternförmiges Verbindungsnetz geschaffen wird.

Die schwimmenden Single-Point-Mooring-Windenergieanlagen 10 sind innerhalb vorbestimmter Teilflächen 40 angeordnet, die parkettiert angeordnet sind und das Gesamtareal des Offshore-Windparks darstellen. Die Teilflächen 40 sind in Fig. 2 als Hexagon ausgebildet. Entweder orientiert sich die Parkettierung dabei an den die jeweilige schwimmende Single-Point-Mooring-Windenergieanlage 10 verankernden Gründungselementen oder alternativ an einem anderen Faktor, insbesondere an einem Vielfachen des Rotordurchmessers der im Offshore-Windpark angeordneten schwimmenden Single-Point-Mooring-Windenergieanlagen 10.

Die Sammelstation 20 ist in Fig. 2 im Mittelpunkt eines gestrichelt dargestellten, die schwimmenden Single-Point-Mooring-Windenergieanlagen 10 umfassenden Umkreises angeordnet. Dabei ist die Sammelstation 20 des in Fig. 2 gezeigten Offshore-Windparks 100 im Schwerpunkt der Parkettierung der mit der Sammelstation 20 verbundenen schwimmenden Single-Point-Mooring-Windenergieanlagen 10 angeordnet.

Entsprechend der Erfindung ist die Summe der Länge der direkten Verbindungen zwischen den schwimmenden Single-Point-Mooring-Windenergieanlagen 10 und der Sammelstation 20 geringer als die Länge einer gedachten die Sammelstation 20 und die schwimmenden Single-Point-Mooring-Windenergieanlagen 10 miteinander verbindenden Linie, die zu Ausbildung einer Ring- oder Linientopologie erforderlich wäre.

Die in Fig. 2 dargestellte Ausgestaltung weist die kürzeste Gesamtlänge der erforderlichen Verbindungen zwischen den schwimmenden Single-Point-Mooring-Windenergieanlagen 10 und der Sammelstation 20 auf, wobei die Gesamtlänge der 5,19-fachen Länge des Abstandes zwischen den Einzelanlagen ausmacht und der Mittelwert der Kabellängen das 0,86-fache des Anlagenabstandes beträgt. Bei einer Ringverkabelung würde der Mittelwert der Kabellängen zwischen den Anlagen mindestens das 1,4-fache des Anlagenabstandes betragen und damit ein deutlich dickeres und somit auch teureres Kabel benötigt werden.

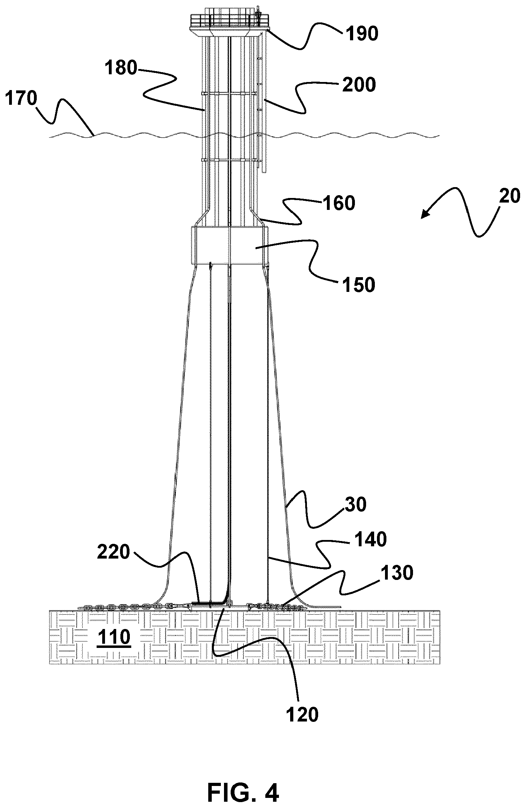

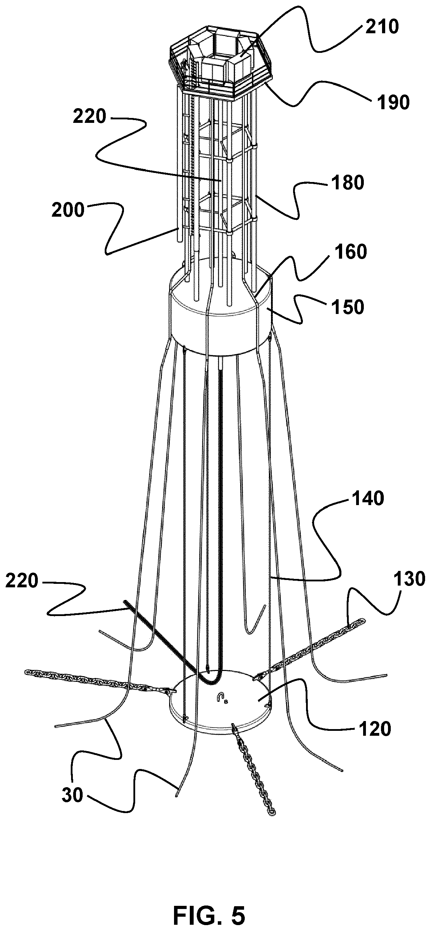

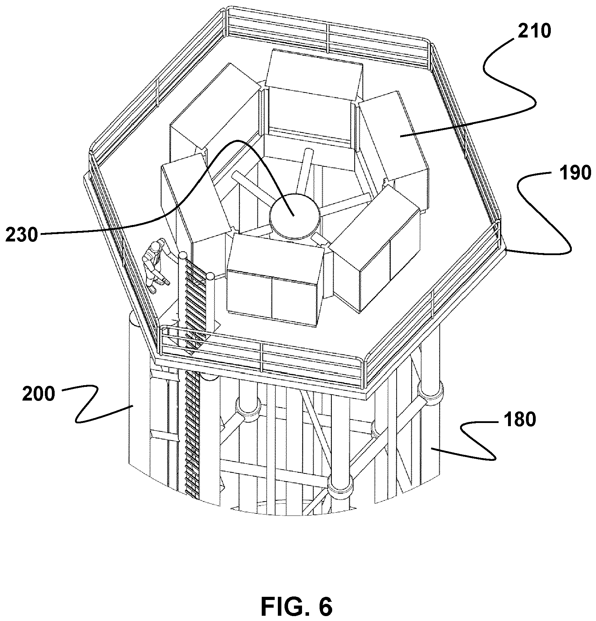

Die Sammelstation 20 ist - wie Fig. 4 bis Fig. 6 zeigen - bevorzugt schwimmend, insbesondere als Tension-Leg-Plattform (TLP) ausgebildet und darüber hinaus mit einer eine benachbarte schwimmende Single-Point-Mooring-Windenergieanlage 10 am Boden befestigenden Gründung verbunden, sodass der Material- und Installationsaufwand des Offshore-Windparks 100 gegenüber herkömmlichen Offshore-Windparks reduziert ist.

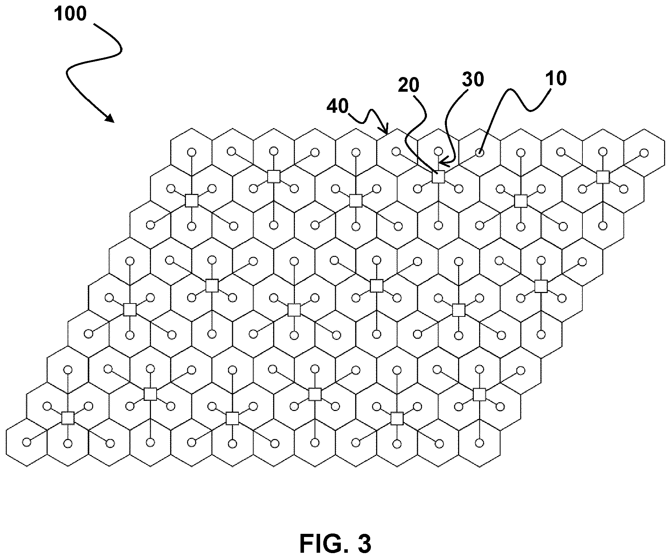

Dem in Fig. 2 dargestellten Ausführungsbeispiel kommt besondere Bedeutung zu, da sich die dargestellte Gruppierung aus sechs schwimmenden Single-Point-Mooring-Windenergieanlagen 10, die innerhalb aus parkettierten, jeweils als Hexagon ausgebildeten Teilflächen 40 angeordnet sind, für die Ausbildung größerer Offshore-Windparks eignet, bei dem - wie Fig. 3 zeigt - weitere Teilmengen der den Offshore-Windpark 100 bildenden schwimmenden Single-Point-Mooring-Windenergieanlagen 10 unter Ausbildung jeweils weiterer sternförmiger Stromnetze jeweils mit einem eigenen Seekabel 30 direkt mit jeweils einer weiteren Sammelstation 20 verbunden sind.

Die mittlere Kabellänge der in jeweils aus sechs Anlagen bestehenden Gruppen beträgt jeweils nur 86 % des Abstandes der Anlagen zueinander. Zur Trennung der Anlagen vom Netz wird - im Gegensatz zu einer Ringverkabelung, bei der drei Schaltanlagen pro Anlage benötigt werden - nur jeweils eine Schaltanlage pro Anlage an der Sammelstation 20 benötigt, sodass auch beim Abschalten einer Anlage allein alle anderen Anlagen unbeeinflusst bleiben und Energie produzieren können.

Die Ausbildung der Teilflächen 40 als Hexagone hat den Vorteil, dass zur Verankerung der schwimmenden Single-Point-Mooring-Windenergieanlagen 10 eine hinsichtlich der Verteilung der Zugkräfte vorteilhafte Ausführung mit sechs Mooringleinen in jeweils einem Winkel von 60° verwendet werden kann. Bei geschickter Anordnung von 6er-Gruppen werden die von den Anlagen 10 führenden Seekabel 30 jeweils zu einer Sammelstation 20 geführt, wobei dort die sechs Schaltanlagen für die sechs Anlagen untergebracht sind und die Verbindung auf einer elektrischen Sammelschiene zum Anschluss an die Übertragungsleitung hergestellt wird.

Werden die Anlagen 10 bei einem Spannungslevel von 66 kV verschaltet wird ergibt sich für sechs Anlagen der zukünftigen Leistungsklasse von >15 MW eine Übertragungsleistung von 6 x 15 MW = 90+ MW. Dieses kann über eine einzige Übertragungsleitung an Land übertragen werden, sodass ein weiteres Offshore-Umspannwerk im Windpark nicht erforderlich ist.

Fig. 3 zeigt insbesondere einen Offshore-Windpark 100 mit insgesamt 102 schwimmenden Single-Point-Mooring-Windenergieanlagen 10 mit einer Gesamtleistung von >1.500 MW. Die Single-Point-Mooring-Windenergieanlagen 10 jeweils sind in 18 Gruppen zu 6 Anlagen 10 aufgeteilt. Die Gesamtleistung wird insbesondere mit 18 Einzelleitungen auf 66 kV Ebene an Land übertragen. Gegenüber einer Ringverkabelung mit 306 Schaltanlagen werden bei der hier dargestellten Ausgestaltung nur 102 Schaltanlagen benötigt. Bei einem aktuellen Stückpreis von ca. 100.000 € macht das einen Kostenunterschied von 20 Mio € aus. Die Kabellänge der Parkverkabelung ist in diesem bevorzugten Ausführungsbeispiele auf 88 Anlagenabstände (ca. 110 km Kabellänge) reduziert, wobei bei einer Ringverkabelung mindestens 144 Anlagenabständen (ca. 180 km Kabellänge) zu berücksichtigen wären. Unter Berücksichtigung der Verlege- und Kabelkosten macht dieses einen Unterschied von ca. 40 Mio € aus. Dabei ist aber noch zu bedenken, dass die Kabel zum Anschluss der Einzelanlagen an die Sammelstation wesentlich dünner und kostengünstiger ausfallen. Dieses Beispiel zeigt die Reduzierung des Material- und Installationsaufwand derartiger Offshore-Windparks sehr deutlich.

Fig. 4, Fig. 5 und Fig. 6 zeigen verschiedene Ansichten einer besonders bevorzugt ausgestalteten Sammelstation, die sechs mit dieser verbundene Anlagen über Mittelspannungsschaltanlagen absichert, über eine elektrische Sammelschiene die Leistung der Windenergieanlagen zusammenführt und auf derselben Spannungsebene über ein Übertragungskabel mit dem landseitigen Stromnetz verbunden ist.

Insbesondere zeigen die vorgenannten Abbildungen eine Sammelplattform 20, an der sechs Seekabel 30 von sechs Windenergieanlagen zusammengeschaltet werden. Im Meeresboden 110 ist ein Verankerungselement 120 vorgesehen, das beispielweise ein Rammpfahl oder auch eine Sauglocke sein kann. Dieses Element stellt eine feste Verankerung zwischen dem Boden 110 und der Sammelplattform 20 und gegebenenfalls auch zur zusätzlichen Anbindung der Windenergieanlagen 10 mit Hilfe von Mooringleinen oder -ketten 130 dar. An diesem Verankerungselement 120 sind mehrere Verbindungselemente 140, beispielsweise aus Synthetikleinen oder Drahtseilen, vorgesehen. Am oberen Ende dieser Verbindungselemente 140 ist ein Auftriebskörper 150 befestigt, der durch seien eigene Verdrängung so viel Auftrieb erzeugt, dass die gesamte Sammelplattform 20 aufrecht schwimmend im Wasser gehalten wird, ohne dass vertikale Bewegungen und nur wenig horizontale- und Rotationsbewegungen ausgeführt werden können. Durch eine geschickte Anordnung der Verbindungelemente 140 können die Bewegungen minimiert werden, auch bei starkem Wellengang. Auf dem Schwimmkörper 150 ist eine Mehrzahl von Trägern 180 befestigt, die senkrecht nach oben durch die Wasseroberfläche 170 stoßen und an deren oberen Ende eine Plattform 190 befestigt ist, die die Schaltanlagen 210 für jede einzelne Windkraftanlage 10 aufnimmt. Die Länge der Träger 180 ist dabei vorteilhaft so zu wählen, dass eine größte anzunehmende Welle weder die Oberseite des Auftriebskörpers 150 freilegt, noch die Plattform 190 an deren Unterseite trifft. Durch die Einstellung der Länge der Verbindungselemente 140 ist dann die der Schwimmplattform 20 in der Schwimmhöhe so einzustellen, dass die Oberseite des Schwimmkörpers 150 und die Unterseite der Plattform 190 zirka gleichmäßig vom mittleren Wasserstand der Wasseroberfläche 170 entfernt sind. An der Trägerstruktur 180 sind Schutzrohre 160 befestigt, die die Seekabel 30 zu den einzelnen Windenergieanlagen 10 aufnehmen und schützen.

Zusätzlich ist für Wartungszwecke, die Zugänglichkeit zur Plattform 190 durch ein Bootanlandung 220 geschaffen. Auf der Plattform 190 sind bevorzugt kreisförmig so viele Schaltanlagen 210 angeordnet wie Windenergieanlagen 10 über die Seekabel 30 an eine Sammelplattform 20 angeschlossen werden sollen. Die gesamte Plattform 190 inklusive der Schaltanlagen 210 ist durch eine nicht gezeichnete Verkleidung gegen Witterungseinflüsse geschützt. Gegebenenfalls sind Entfeuchter und Heizungen vorzusehen.

Die Schaltanlagen 210 werden auf einer elektrischen Sammelschiene 230 zusammengeführt und über die Übertragungsleitung 220 mit einem Netzeinspeisepunkt an Land oder einer Offshore-Sammelstation verbunden. Auf diese Sammelplattform 20 findet kein Umspannen der elektrischen Energie satt, sondern nur die Zusammenfassung der Energie der einzelnen Windenergieanlagen 10 auf dem gleichen Spannungsniveau und Ableitung über das Sammelkabel 220. Über diese Übertragungsleitung 220 werden auch Glasfaserleitungen geführt, die z.B. zur Ansteuerung der Schaltanlagen 210 dienen.

## Patentansprüche

1. Offshore-Windpark (100) mit einer Mehrzahl von innerhalb von parkettiert angeordneten Teilflächen (40) angeordneten schwimmenden Single-Point-Mooring-Windenergieanlagen (10) und einer mit den schwimmenden Single-Point-Mooring-Windenergieanlagen (10) verbundenen Sammelstation (20), die mittels einer Übertragungsleitung (220)-mit einem Stromnetz verbunden ist,
**dadurch gekennzeichnet, dass**
wenigstens eine Teilmenge der schwimmenden Single-Point-Mooring-Windenergieanlagen (10) unter Ausbildung eines sternförmigen Stromnetzes jeweils mit einem eigenen Seekabel (30) direkt mit der Sammelstation (20) verbunden ist, wobei die Summe der Länge der direkten Verbindungen zwischen den schwimmenden Single-Point-Mooring-Windenergieanlagen (10) und der Sammelstation (20) geringer ist als die Länge einer gedachten die Sammelstation (20) und die schwimmenden Single-Point-Mooring-Windenergieanlagen (10) miteinander verbindenden Linie.

2. Offshore-Windpark (100) nach Anspruch 1, **dadurch gekennzeichnet, dass** die elektrische Spannungsebene des in den zur Sammelstation (20) führenden Seekabeln (30) geführten Stroms mit der elektrischen Spannungsebene des in der mit der Übergabestation verbundenen Übertragungsleitung (220) geführten Stroms identisch ist.

3. Offshore-Windpark (100) nach einem der vorhergehenden Ansprüche, **dadurch gekennzeichnet, dass** die elektrische Spannung des in den zur Sammelstation (20) führenden Seekabeln (30) geführten Stroms mit der elektrischen Spannung des in der mit der Übergabestation verbundenen Übertragungsleitung (220) geführten Stroms identisch ist.

4. Offshore-Windpark (100) nach einem der vorhergehenden Ansprüche, **dadurch gekennzeichnet, dass** die Sammelstation (20) im Mittelpunkt eines wenigstens die Teilmenge der schwimmenden Single-Point-Mooring-Windenergieanlagen (10) umfassenden Umkreises angeordnet ist.

5. Offshore-Windpark (100) nach einem der vorhergehenden Ansprüche, **dadurch gekennzeichnet, dass** die Sammelstation (20) im Schwerpunkt der Parkettierung der mit der Sammelstation (20) verbundenen schwimmenden Single-Point-Mooring-Windenergieanlagen (10) angeordnet ist.

6. Offshore-Windpark (100) nach einem der vorhergehenden Ansprüche, **dadurch gekennzeichnet, dass** die Sammelstation (20) schwimmend ausgebildet ist.

7. Offshore-Windpark (100) nach Anspruch 6, **dadurch gekennzeichnet, dass** die Sammelstation (20) als Tension-Leg-Plattform (TLP) ausgebildet ist.

8. Offshore-Windpark (100) nach einem der Ansprüche 6 und 7, **dadurch gekennzeichnet, dass** die Sammelstation (20) mit einer eine schwimmende Single-Point-Mooring-Windenergieanlage (10) am Boden befestigenden Gründung verbunden ist.

9. Offshore-Windpark (100) nach einem der vorhergehenden Ansprüche, **dadurch gekennzeichnet, dass** eine weitere Teilmenge der schwimmenden Single-Point-Mooring-Windenergieanlagen (10) unter Ausbildung eines weiteren sternförmigen Stromnetzes jeweils mit einem eigenen Seekabel (30) direkt mit einer weiteren Sammelstation (20) verbunden ist.

10. Offshore-Windpark (100) nach einem der vorhergehenden Ansprüche, **dadurch gekennzeichnet, dass** die Teilmenge oder die weitere Teilmenge sechs schwimmende Single-Point-Mooring-Windenergieanlagen (10) umfasst.

11. Offshore-Windpark (100) nach einem der vorhergehenden Ansprüche, **dadurch gekennzeichnet, dass** das mit der Sammelstation (20) verbundene Stromnetz ein landseitiges Stromnetz ist.

12. Offshore-Windpark (100) nach einem der vorhergehenden Ansprüche, **dadurch gekennzeichnet, dass** die Teilflächen der Parkettierung als Dreieck, Rechteck oder Hexagon ausgebildet sind.

## Claims

1. Offshore wind farm (100) with a plurality of floating single-point mooring wind turbines (10) arranged within parquetised sub-areas (40) and a collection station (20) connected to the floating single-point mooring wind turbines (10), which is connected to a power grid by means of a transmission line (220)
**characterized in that**
at least a subset of the floating single-point-mooring wind turbines (10) is connected directly to the collecting station (20), forming a star-shaped power grid, in each case with its own submarine cable (30), the sum of the length of the direct connections between the floating single-point-mooring wind turbines (10) and the collection station (20) being less than the length of an imaginary line connecting the collection station (20) and the floating single-point-mooring wind turbines (10) to one another.

2. Offshore wind farm (100) according to claim 1, **characterised in that** the electrical voltage level of the current carried in the submarine cables (30) leading to the collection station (20) is identical to the electrical voltage level of the current carried in the transmission line (220) connected to the transfer station.

3. Offshore wind farm (100) according to one of the preceding claims, **characterised in that** the electrical voltage of the current carried in the submarine cables (30) leading to the collection station (20) is identical to the electrical voltage of the current carried in the transmission line (220) connected to the transfer station.

4. Offshore wind farm (100) according to one of the preceding claims, **characterised in that** the collection station (20) is arranged in the centre of a circumference comprising at least the subset of the floating single-point-mooring wind turbines (10).

5. Offshore wind farm (100) according to one of the preceding claims, **characterised in that** the collection station (20) is arranged in the median point of the parquetry of the floating single-point mooring wind turbines (10) connected to the collection station (20).

6. Offshore wind farm (100) according to one of the preceding claims, **characterised in that** the collecting station (20) is designed to float.

7. Offshore wind farm (100) according to claim 6, **characterised in that** the collection station (20) is designed as a tension leg platform (TLP).

8. Offshore wind farm (100) according to one of claims 6 and 7, **characterised in that** the collection station (20) is connected to a foundation fixing a floating single-point-mooring wind turbine (10) to the ground.

9. Offshore wind farm (100) according to one of the preceding claims, **characterised in that** a further subset of the floating single-point mooring wind turbines (10) is connected directly to a further collection station (20), forming a further star-shaped power grid, each with its own submarine cable (30).

10. Offshore wind farm (100) according to one of the preceding claims, **characterised in that** the subset or the further subset comprises six floating single-point mooring wind turbines (10).

11. Offshore wind farm (100) according to one of the preceding claims, **characterised in that** the power grid connected to the collection station (20) is an onshore power grid.

12. Offshore wind farm (100) according to one of the preceding claims, **characterised in that** the partial areas of the parquetry are designed as a triangle, rectangle or hexagon.

## Revendications

1. Parc éolien en mer (100) comportant une pluralité d'éoliennes flottantes à amarrage unipoint (10) disposées à l'intérieur de surfaces partielles (40) disposées à la manière d'un parc et un poste de collecte (20) connecté aux éoliennes flottantes à amarrage unipoint (10) et connecté à un réseau électrique au moyen d'une ligne de transmission (220),
**caractérisé en ce que**
au moins un sous-ensemble des éoliennes flottantes à amarrage unipoint (10) est connecté directement au poste de collecte (20) en formant un réseau électrique en forme d'étoile, respectivement avec un câble sous-marin (30) propre, dans lequel la somme de la longueur des connexions directes entre les éoliennes flottantes à amarrage unipoint (10) et le poste de collecte (20) est inférieure à la longueur d'une ligne imaginaire connectant entre eux le poste de collecte (20) et les éoliennes flottantes à amarrage unipoint (10).

2. Parc éolien en mer (100) selon la revendication 1, **caractérisé en ce que** le niveau de tension électrique du courant circulant dans les câbles sous-marins (30) menant au poste de collecte (20) est identique au niveau de tension électrique du courant circulant dans la ligne de transmission (220) connectée au poste de transmission.

3. Parc éolien en mer (100) selon l'une des revendications précédentes, **caractérisé en ce que** la tension électrique du courant circulant dans les câbles sous-marins (30) menant au poste de collecte (20) est identique à la tension électrique du courant circulant dans la ligne de transmission (220) connectée au poste de transmission.

4. Parc éolien en mer (100) selon l'une des revendications précédentes, **caractérisé en ce que** le poste de collecte (20) est disposée au centre d'un périmètre comprenant au moins le sous-ensemble d'éoliennes flottantes à amarrage unipoint (10).

5. Parc éolien en mer (100) selon l'une des revendications précédentes, **caractérisé en ce que** le poste de collecte (20) est disposé au niveau du centre de gravité du parc d'éoliennes flottantes à amarrage unipoint (10) connectées au poste de collecte (20).

6. Parc éolien en mer (100) selon l'une des revendications précédentes, **caractérisé en ce que** le poste de collecte (20) est conçu de manière à être flottant.

7. Parc éolien en mer (100) selon la revendication 6, **caractérisé en ce que** le poste de collecte (20) est conçu comme une plateforme à câbles tendus (TLP).

8. Parc éolien en mer (100) selon l'une des revendications 6 et 7, **caractérisé en ce que** le poste de collecte (20) est relié à une fondation fixant au sol une éolienne flottante à amarrage unipoint (10).

9. Parc éolien en mer (100) selon l'une des revendications précédentes, **caractérisé en ce qu'**un autre sous-ensemble d'éoliennes flottantes à amarrage unipoint (10) est connecté directement à un autre poste de collecte (20), respectivement avec un câble sous-marin (30) propre, en formant un autre réseau électrique en étoile.

10. Parc éolien en mer (100) selon l'une des revendications précédentes, **caractérisé en ce que** le sous-ensemble ou l'autre sous-ensemble comprend six éoliennes flottantes à amarrage unipoint (10).

11. Parc éolien en mer (100) selon l'une des revendications précédentes, **caractérisé en ce que** le réseau électrique connecté au poste de collecte (20) est un réseau électrique terrestre.

12. Parc éolien en mer (100) selon l'une des revendications précédentes, **caractérisé en ce que** les surfaces partielles du parc sont conçues sous forme de triangle, de rectangle ou d'hexagone.
